# EUROPÄISCHE PATENTSCHRIFT

(11) **EP 1 661 670 B1**
(45) Veröffentlichungstag und Bekanntmachung des Hinweises auf die Patenterteilung: **07.11.2007**
(21) Anmeldenummer: 05024475.5
(22) Anmeldetag: 10.11.2005
(51) Int. Cl.: B25J 15/08

(54) **Greif- und Spannvorrichtung mit Magnetantrieb zum Bewegen eines Fingers**
Gripping and clamping device with magnetic drive for moving a finger
Dispositif de préhension et de serrage avec entraînement magnétique pour actionner un doigt

(30) Priorität: 27.11.2004 DE 102004059342
(43) Veröffentlichungstag der Anmeldung: 31.05.2006
(73) Patentinhaber: Schunk GmbH & Co. KG Spann- und Greiftechnik, 74348 Lauffen (DE)
(72) Erfinder: Fellhauer, Bruno, 74336 Brackenheim (DE)
(74) Vertreter: Bulling, Alexander

(56) Entgegenhaltungen:
- DE-A1- 19 529 945
- PATENT ABSTRACTS OF JAPAN Bd. 014, Nr. 473 (M-1035), 16. Oktober 1990 (1990-10-16) -& JP 02 190229 A (SANMEI DENKI KK), 26. Juli 1990 (1990-07-26)

## Beschreibung

Die Erfindung betrifft eine Greif- oder Spannvorrichtung, mit einem Grundkörper, mit wenigstens einem gegenüber dem Grundkörper bewegbaren Finger und mit einem Antrieb zum Bewegen des Fingers, gemäß dem Oberbegriff des Anspruchs 1. Eine solche Vorrichtung ist Beispiel aus der DE-A-195 29 945 bekannt.

Derartige Greif- oder Spannvorrichtungen sind in vielfältiger Art und Weise bekannt. Bei Greif- oder Spannvorrichtungen, mit denen eine vergleichsweise hohe Greif- oder Spannkraft erzeugt werden soll, finden in der Regel pneumatische oder hydraulische Antriebe Verwendung. Diese Antriebe sind vergleichsweise aufwändig und träge in der Ansteuerung.

Aus der DE 101 56 261 sind beispielsweise Greif- oder Spannvorrichtungen bekannt geworden, bei denen ein piezoelektrischer Aktuator zum Antreiben des Fingers verwendet wird. Derartige Antriebe sind vergleichsweise teuer und benötigen eine aufwändige und teuere Ansteuerung.

Ferner sind aus dem Stand der Technik elektromotorische Antriebe bekannt, bei denen beispielsweise über eine Spindel der Finger antreibbar ist. Derartige Antriebe sind in der Ansteuerung und in der Regelung aufwändig.

Aus der DE 195 29 945 C2 und der DE 198 14 834 A1 sind Greifvorrichtungen bekannt geworden, die einen Antrieb zum Bewegen eines Fingers umfassen, der einen grundkörperseitigen Stellmagneten in Form eines Elektromagneten aufweist. Der Elektromagnet bildet, wie jeder Elektromagnet, beim Bestromen zwei Pole aus. Zur Bewegung des Fingers findet nur ein Pol Verwendung.

Der vorliegenden Erfindung liegt die Aufgabe zugrunde, eine kostengünstige Greif- oder Spannvorrichtung bereitzustellen, die eine einfache Bedienbarkeit ermöglicht. Insbesondere sollen lediglich zwei Stellungen der Greif- oder Spannvorrichtung anfahrbar sein: Offen oder geschlossen. Die Greif- oder Spannvorrichtung soll insbesondere als Pick-and-Place-Greifvorrichtung Verwendung finden; es soll insbesondere ein schnelles Handling von kleinen, beziehungsweise leichten, Bauteilen erreichbar sein. Dabei sollen möglichst große Greif- bzw. Spannkräfte zur Verfügung gestellt werden.

Diese Aufgabe wird mit einer Greif- oder Spannvorrichtung mit den Merkmalen des Anspruchs 1 gelöst. Eine solche Vorrichtung hat den Vorteil, dass bei Änderung der Polarisierung des Stellmagneten die ferromagnetischen Gegenelemente gleichzeitig angezogen und abgestoßen werden, wobei aus dem Anziehen, beziehungsweise Abstoßen, die Bewegung des Fingers resultiert. Als ferromagnetisches Gegenelemente kommt insbesondere ein Gegenelement aus Weicheisen oder aus einem Permanentmagneten in Betracht. Mit einer derartigen Greif- oder Spannvorrichtung können folglich auf einfache Art und Weise insbesondere kleine und leichte Bauteile gehandhabt werden, wobei vergleichsweise große Greif- oder Spannkräfte zur Verfügung gestellt werden können. Aufwändige Antriebsbauteile sind nicht erforderlich. Ferner ist keine aufwändige Steuer- oder Regeleinrichtung vorzusehen.

Der Finger kann dabei zum unmittelbaren Greifen oder Spannen eines Werkstücks Verwendung finden. Der Finger kann aber auch als Adapterelement oder Stellelement Verwendung finden, das mit einem anderen Bauteil derart zusammenwirkt, dass das andere Bauteil, und nicht der Finger als solcher, das Werkstück greift beziehungsweise spannt.

Bei einer vorteilhaften Ausgestaltung der Erfindung ist vorgesehen, dass der Stellmagnet von wenigstens einem ansteuerbaren Elektromagneten oder von wenigstens einem am Grundköper beweglich gelagerten Permanentmagneten gebildet wird. Das Vorsehen eines Elektromagneten hat den Vorteil, dass bei entsprechender Ansteuerung bzw. bei entsprechender Bestromung des Elektromagenten entsprechende, Magnetfelder an den Polen des Magneten erzeugt werden. Bei Vorsehen eines beweglich gelagerten Permanentmagneten wird die Polarisierung des Permanentmagneten gegenüber dem jeweiligen Gegenelement durch ein Bewegen des Permanentmagneten geändert. In einer Lage des Permanentmagneten kann dem jeweiligen Gegenelement ein Südpol gegenüberliegen; in einer anderen Lage des Permanentmagneten kann dem jeweiligen Gegenelement ein Nordpol gegenüberliegen. Entsprechend wird dann das jeweiligen Gegenelement angezogen oder abgestoßen. Das vorsehen von einem beweglich gelagerten Permanentmagneten als Stellmagnet hat den Vorteil, dass der Permanentmagnet auch von Hand bewegt werden kann. D.h., ein Spannen oder Greifen durch die Vorrichtung kann ohne zusätzliche Antriebsmittel erreicht werden.

Gemäß einer vorteilhaften Ausgestaltung der Erfindung kann vorgesehen sein, dass fingerseitige und/oder grundkörperseitige Anschläge zur Bewegungsbegrenzung des Fingers vorgesehen sind. Hierdurch können insbesondere definierte Endlagen des Fingers angefahren werden. Bei Vorsehen eines Elektromagneten als Stellmagnet wird also bei Bestromung des Elektromagneten in die eine Richtung die eine Bewegungsendlage und bei Bestromung in die andere Richtung die andere Bewegungsendlage des Fingers angefahren.

Dabei ist vorteilhaft, wenn die Anschläge vom jeweiligen Gegenelement und/oder vom Stellmagneten gebildet werden. Dies hat den Vorteil, dass in der Bewegungsendlage die maximale Kraft des Magneten auf den Finger ausgeübt wird. Gegebenenfalls kann vorgesehen sein, dass in der Bewegungsendlage der Finger eine Luftbrücke zwischen dem jeweiligen Gegenelement und dem Stellmagneten verbleibt oder dass ein nichtmagnetisierbares Material, wie beispielsweise Kunststoff oder Aluminium, zwischen dem jeweiligen Gegenelement und dem Stellmagneten angeordnet ist. Hierdurch wird ein unerwünschtes "Kleben" der Gegenelemente am Stellmagneten verhindert, da ein Lösen eines unmittelbar am Stellmagneten anliegenden Gegenelements nur mit erhöhter Krafteinwirkung erreichbar ist.

Die Gegenelemente können mit dem Grindkörper bzw. Finger einstückig bzw. einteilig ausgebildet sind.

Besonders vorteilhaft ist, wenn der Stellmagnet am Grundkörper und die Gegenelemente am Finger angeordnet sind. Dies kann deshalb vorteilhaft sein, da der Stellmagnet, insbesondere wenn er als Elektromagnet ausgebildet ist, in der Regel mehr Bauraum beansprucht als das aus einem ferromagnetischen Material gebildete Gegenelement. Ferner ist ein am Finger angeordneter Stellmagnet aufgrund der beweglichen Anordnung des Fingers gegenüber dem Grundkörper aufwändiger. Die Erfindung schließt aber nicht aus, dass der Stellmagnet auch am Finger angeordnet sein kann.

Als besonders vorteilhaft hat sich herausgestellt, wenn die Gegenelemente als Permanentmagnet oder auch als Elektrogegenmagnet ausgebildet sind. Durch Verwendung eines Permanentmagneten kann die Greif- beziehungsweise Spannkraft erhöht werden, da der Permanentmagnet stärker vom elektromagnetischen Feld des Stellmagneten angezogen, beziehungsweise abgestoßen, wird, als ein nicht permanent magnetisiertes ferromagnetisches Gegenelement, das beispielsweise aus Weicheisen sein kann. Ebenso ist erfindungsgemäß denkbar, dass das jeweilige Gegenelement als Elektrogegenmagnet ausgebildet ist, der dann entgegengesetzt zum elektrischen Magnetfeld des eigentlichen Stellmagneten angesteuert wird. Diese Ausführungsform ist in der Realisierung aufwändiger; mit ihr lassen sich aber höhere Greif- oder Spannkräfte realisieren.

Gemäß einer weiteren Ausführungsform der Erfindung ist der Finger entlang einer Linie gelagert angeordnet. Die Linie verläuft hierbei insbesondere senkrecht zur Längsachse des Fingers. Dabei können als Gegenelemente ausgebildete Permanentmagnete Verwendung finden, deren Nord-Süd-Richtung senkrecht zur Längsachse des Fingers verläuft und wobei der Stellmagnet in Verlängerung der Nord-Süd-Richtung angeordnet ist. Aufgrund einer entsprechenden Lagerung wird folglich beim entsprechenden Polarisierung des Stellmagneten der fingerseitige Permanentmagnet entlang einer Linie vom Stellmagneten angezogen, beziehungsweise abgestoßen. Dabei können insbesondere als Stellmagnet zwei Elektromagneten Verwendung finden, die entlang einer Linie, nämlich der Nord-Süd-Richtung des Permanentmagneten, angeordnet sind. Die beiden Elektromagneten werden dann zur Bewegung des Fingers dann so angesteuert, dass der eine Elektromagnet den fingerseitigen Permanentmagneten anzieht und der andere Elektromagnet den Permanentmagneten abstößt. Hierdurch wird die Greif- beziehungsweise Spannkraft erhöht.

Gemäß einer weiteren Ausführungsform der Erfindung ist denkbar, dass der Stellmagnet als U-förmiger Elektromagnet derart ausgebildet ist, dass die fingerseitigen Gegenelemente zwischen den Polen des Elektromagneten bewegbar angeordnet sind. Beim Bestromen des Elektromagneten in die eine Richtung wird folglich das Gegenelement entlang seiner Bewegungslinie in die eine Richtung bewegt, beim Bestromen des Elektromagneten in die andere Richtung erfolgt die Bewegung in die andere Bewegungsrichtung. Da die beiden fingerseitigen Gegenelemente dann vom einen Pol des einen Elektromagneten abgestoßen und vom anderen Pol gleichzeitig angezogen werden, wird auch hier eine vergleichsweise hohe Greif- oder Spannkraft zur Verfügung gestellt.

Eine weitere, ebenfalls bevorzugte Ausführungsform der Erfindung sieht vor, dass der Finger schwenkbar angeordnet ist. Auch hier kann mittels eines entsprechend polarisierbaren Stellmagneten und mit diesem zusammenwirkende Gegenelemente eine gezielte Bewegung des Fingers realisiert werden.

Dabei ist besonders vorteilhaft, wenn der Finger zwei Gegenelemente aufweist, wobei die Schwenkachse zwischen den beiden Gegenelementen angeordnet ist, und wenn jedes Gegenelement mit jeweils einem Pol des Stellmagneten derart zusammenwirkt, dass bei einer entsprechenden Polarisierung ' des Stellmagneten ein Gegenelement von einem Stellmagnetpol angezogen und das andere Gegenelement vom anderen Stellmagnetpol abgestoßen wird. Auch hier können vergleichsweise hohe Greif- oder Spannkräfte zur Verfügung gestellt werden. Dabei kann die Schwenkachse insbesondere mittig zwischen den beiden Gegenelementen liegen. Allerdings ist auch denkbar, dass die Schwenkachse die beiden Gegenelemente in einem bestimmten Verhältnis unterteilt; hierdurch kann ein Getriebeeffekt erzielt werden.

Gemäß einer weiteren Ausführungsform der Erfindung ist denkbar, dass zwei oder mehrere Finger in ihrer neutralen Mittelstellung im Wesentlichen parallel um einen zentrisch angeordneten, grundkörperseitigen Stellmagneten angeordnet sind. Insbesondere dann, wenn die Finger schwenkbar angeordnet sind, können mit lediglich einem Stellmagneten mehrere Finger zeitgleich bewegt werden. Die einzelnen Finger haben dabei dann wenigstens zwei Gegenelemente, die vom Stellmagneten angezogen oder abgestoßen werden. Die Finger sehen zwei Gegenelemente vor, die mit den beiden Polen des Stellmagneten zusammenwirken.

Erfindungsgemäß kann ferner vorgesehen sein, dass der Stellmagnet als axial verschiebbar am Grundkörper angeordneter Permanentmagnet ausgebildet ist, wobei die fingerseitigen Gegenelemente in einer ersten Verschiebelage des Permanentmagneten angezogen bzw. abgestoßen und in einer zweiten Verschiebelage des Permanentmagneten abgestoßen bzw. angezogen werden. Durch eine derartige Anordnung können mit lediglich einem derart als Permanentmagnet ausgebildeten Stellmagneten mehrere Finger bewegt werden. Die Verschiebung des Permanentmagneten von einer Verschiebelage in die andere Verschiebelage kann dabei manuell oder mittels eines gesonderten Antriebs erfolgen.

Eine weitere vorteilhafte Ausführungsform der Erfindung zeichnet sich dadurch aus, dass der Stellmagnet als grundkörperseitig angeordneter Elektromagnet mit einem von einer bestrombaren Spule umwickelten Kern mit einem oberen und einem unteren Kopf ausgebildet ist, wobei die beiden Köpfe die beiden Pole des Elektromagneten bilden. Die Köpfe können dabei speziell ausgebildet sein, so dass das elektromagnetische Feld in Richtung der Gegenelemente intensiviert, beziehungsweise verdichtet, wird. Hierdurch wird eine weitere Erhöhung der Greif- oder Spannkraft möglich. Die beiden Köpfe können dabei den Anschlag für die Gegenelemente bilden.

Ferner ist erfindungsgemäß ebenfalls denkbar, dass der Kern mit den beiden Köpfen von einer hülsenartigen Abdeckung abgedeckt wird. Die hülsenartige Abdeckung ist dabei vorteilhafterweise aus einem nicht ferromagnetischen Material, wie beispielsweise Kunststoff oder Aluminium. Dadurch wird insbesondere die den Kern umlaufende Spule geschützt. Die Abdeckung kann dabei im Bereich der Köpfe den Anschlag für die Gegenelemente bilden. Hierdurch kann verhindert werden, dass die Gegenelemente unmittelbar an den Polen, bzw. den Köpfen des Elektromagneten zum Anliegen kommen.

Gemäß einer weiteren Ausführungsform der Erfindung ist denkbar, dass bei Vorsehen von mehreren Fingern zur Synchronisierung der Bewegung der einzelnen Finger mechanische Kopplungsmittel vorgesehen sind. Durch diese mechanischen Kopplungsmittel wird ein exakt gleiches Bewegen der Finger ermöglicht.

Insbesondere ist die erfindungsgemäße Greif- oder Spannvorrichtung als 2-Finger-Winkelgreifer oder als 3-Finger-Zentrischwinkelgreifer ausgebildet. Derartige Vorrichtungen werden bei der Handhabung von kleinen und leichten Bauteilen besonders bevorzugt verwendet.

Weitere Merkmale und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Figur 1: eine erste erfindungsgemäße Vorrichtung in perspektivischer Ansicht;
- Figur 2: die Vorrichtung gemäß Figur 1 ohne Grundteil;
- Figur 3: einen Teilschnitt durch die Vorrichtung gemäß Figur 1 und Figur 2;
- Figur 4: eine schematische Darstellung einer zweiten Ausführungsform der Erfindung, und
- Figur 5: eine schematische Darstellung einer dritten Ausführungsform der Erfindung.

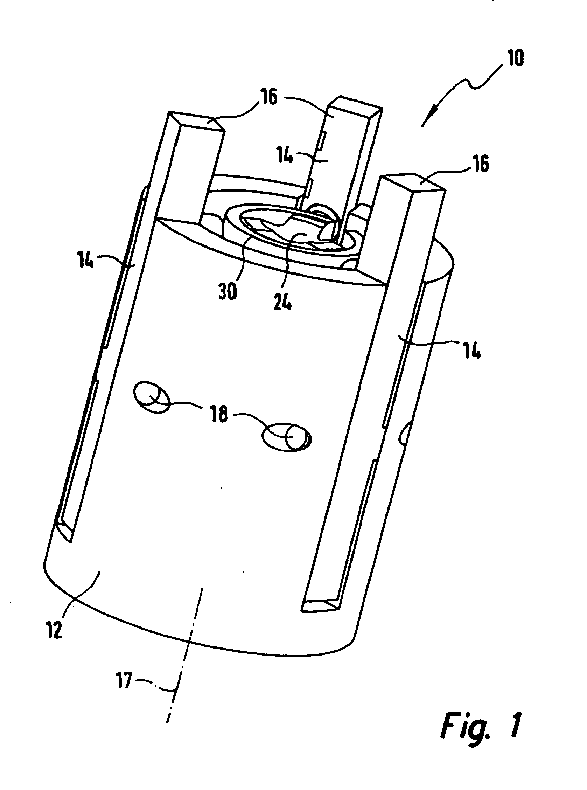

In den Figuren 1 bis 3 ist eine erfindungsgemäße Vorrichtung in Form eines 3-Finger-Zentrischwinkelgreifers 10 dargestellt. Die Vorrichtung 10 umfasst einen Grundkörper 12 und insgesamt drei gegenüber dem Grundkörper bewegbare Finger 14. Mit den freien Enden 16 der Finger 14 können insbesondere leichte und kleine Bauteile gegriffen werden.

Die Finger 14 sehen jeweils zwei quer zur Mittellängsachse 17 verlaufende Lagerzapfen 18 zur verschwenkbaren Lagerung der Finger 14 am Grundkörper 12 vor.

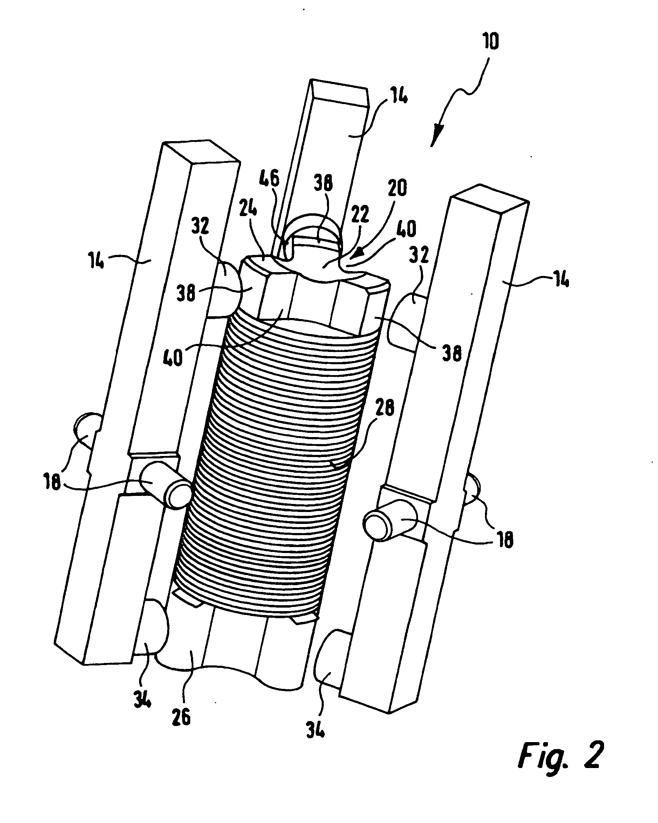

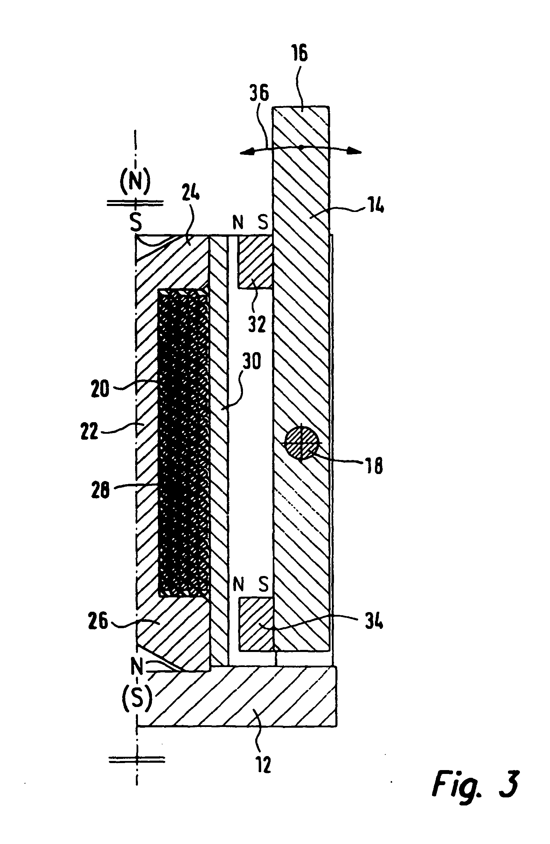

Wie aus der Figur 2 deutlich wird, die die Finger 14 ohne den Grundkörper 12 darstellen, ist im Grundkörper 12 entlang der Mittellängsachse 17 ein Stellmagnet in Form eines Elektromagnet 20 angeordnet. Der grundkörperseitige Elektromagnet 20 umfasst dabei einen Kern 22 mit zwei Köpfen 24 und 26 sowie eine um den Kern aufgewickelte Spule 28. In radialer Richtung ist der Elektromagnet 20 von einer in den Figuren 1 und 3 dargestellten, hülsenartigen Abdeckung 30 umgeben, die insbesondere aus Aluminium oder Kunststoff sein kann. Beim Bestromen des Elektromagneten 20 wird der eine Magnetpol an dem einen Kopf 24 und der andere Magnetpol an dem anderen Kopf 26 ausgebildet. Je nach Richtung der Bestromung ändern sich die Pole an den Köpfen 24, 26.

An den Fingern 14 sind den Köpfen 24, 26 radial gegenüberliegend jeweils zwei Gegenelemente 32, 34 angeordnet. Die Gegenelemente 32 wirken mit dem Kopf 24 und die Gegenelemente 34 mit dem Kopf 26 des Elektromagneten zusammen. Die Gegenelemente 32, 34 sind an den im Wesentlichen zylindrisch ausgebildeten Fingern 14 als in radialer, den Köpfen 24, 26 zugewandter Richtung erhaben ausgebildet.

Die Gegenelemente 32, 34 sind dabei aus einem ferromagnetischen Material. Wie in der Figur 3 angedeutet, sind die Gegenelemente 32, 34 insbesondere als Permanentmagneten ausgebildet, wobei die dem Elektromagneten 20 zugewandten Pole der einzelnen Gegenelemente 32, 34 gleich sind. Gemäß der Figur 3 sind die dem Elektromagneten 20 zugewandten Pole der Gegenelemente 32, 34 jeweils als Nordpole N ausgebildet.

Beim Bestromen des Elektromagneten 20 wird je nach Richtung des Durchflusses am Kopf 24 ein Südpol und am Kopf 26 ein Nordpol, oder umgekehrt, ausgebildet.

Wird der Elektromagnet 20 derart bestromt, dass sich am Kopf 24 ein Südpol ausbildet, so wird der Nordpol des Gegenelements 32 vom Kopf 24 angezogen und der Nordpol des Gegenelements 34 vom Kopf 26 abgestoßen. Insgesamt wird folglich das freie Ende 16 des Fingers 14 nach radial innen, in Richtung des Pfeils 36, bewegt. Aufgrund des zeitgleichen Anziehens der Gegenelemente 32 und des Abstoßens der Gegenelemente 34 wird eine vergleichsweise hohe Greifkraft aufgebracht. Aufgrund der symmetrischen, um die Längsachse 17 radial angeordneten Finger 14, werden die drei Finger 14 zeitgleich bewegt. Zusätzlich kann erfindungsgemäß vorgesehen sein, dass eine mechanische Kopplung zur exakten Synchronisierung der Bewegung der einzelnen Finger 14 vorgesehen ist. Eine derartige mechanische Kopplung ist in den Figuren nicht dargestellt.

In der Figur 3 ist der Finger 14 in einer neutralen Mittelstellung dargestellt; weder das Gegenelement 32 noch das Gegenelement 34 liegt an dem jeweils ihm zugeordneten Kopf 24 oder 26, beziehungsweise an der Abdeckung 30, an. Beim Bestromen des Elektromagneten 20 wird dann das Gegenelement 32 vom Kopf 24 angezogen, beziehungsweise abgestoßen, und das Gegenelement 34 vom Kopf 26 abgestoßen, beziehungsweise angezogen. Die maximale Auslenklage wird dann erreicht, wenn das jeweilige Gegenelement 32, 34 gegen den Kopf 24, 26, beziehungsweise gegen die Abdeckung 30, anschlägt.

Wie gesagt, wird die Bewegung des Fingers 14 durch Anschlagen eines Gegenelements 32, 34, je nach Bestromungsrichtung des Elektromagneten 20, begrenzt. Denkbar ist, die Lage der Lagerzapfen 18 zum Elektromagneten 20 in radialer Richtung einstellbar auszubilden; hierdurch könnte dann der Schwenkwinkel des Fingers 14 eingestellt werden.

Wie insbesondere aus der Figur 3 deutlich wird, liegen die Achsen der Lagerzapfen 18 mittig im Bereich zwischen den beiden Gegenelementen 32, 34. Hierdurch verändert sich der Abstand des Gegenelements 32 zum Kopf 24 reziprok zum Abstand des Gegenelements 34 zum Kopf 26.

Wie insbesondere aus der Figur 2 deutlich wird, sind die Köpfe 24, 26 so ausgebildet, dass der magnetische Fluss in Richtung der ihnen jeweils gegenüberliegenden Gegenelemente 32, 34 verstärkt wird. In Draufsicht weisen die Köpfe 24, 26 dazu im Abstand von 120° angeordnete, sich in radialer Richtung erstreckende Nocken 38 auf. Zwischen den Nocken 38 sind jeweils Materialausnehmungen 40 vorgesehen.

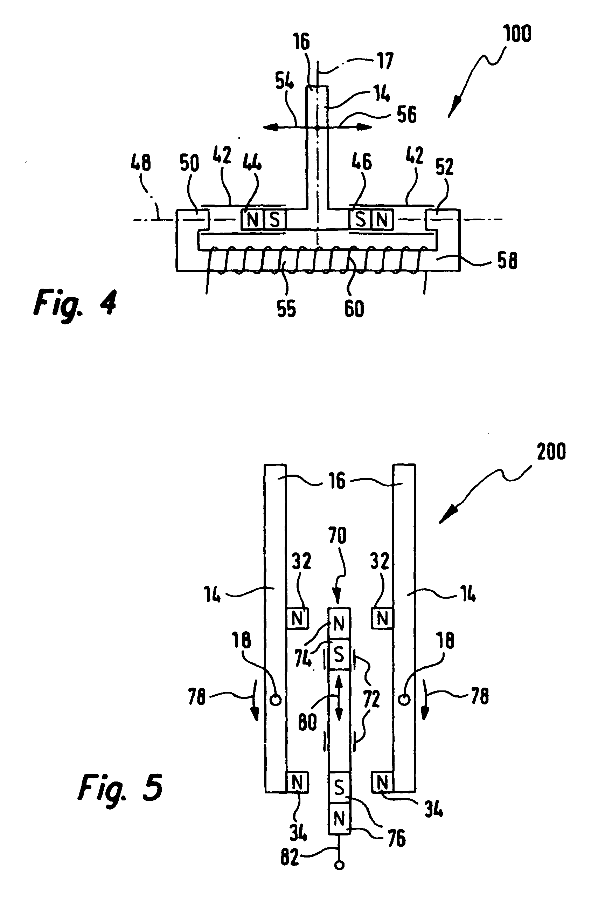

Bei der Greifvorrichtung 100 gemäß Figur 4 ist ein Finger 14 dargestellt, der entgegen der Ausführungsform nach Figur 1 bis 3 nicht schwenkbar angeordnet ist, sondern der entlang einer Linie verschiebbar bewegbar ist. Dazu sind am in der Figur 4 nicht dargestellten Grundkörper Linearführungen 42 vorgesehen. Der Finger 14 sieht insgesamt zwei Gegenelemente 44, 46 vor, die jeweils als Permanentmagnete ausgebildet sind. Die Nord-Süd-Richtung der Permanentmagnete verläuft im Wesentlichen senkrecht zur Längsachse 17 des Fingers 14. In Verlängerung der Achse 48 der Permanentmagneten 44, 46 sind die beiden Pole 50, 52 eines als Elektromagneten 54 ausgebildeten Stellmagneten vorgesehen. Bei Bestromung des Elektromagneten 54 wird am Pol 50, beziehungsweise 52, ein Nordpol und am Pol 52, beziehungsweise 50, ein Südpol ausgebildet. Je nach Polarisierung der Pole 50, 52 bewegt sich der Finger in Richtung der Pfeile 54, 56. Aufgrund des Vorsehens von zwei Gegenelementen 44, 46 wird bei Bestromung des Elektromagneten 54 eine Kraftverstärkung bewirkt.

Der Elektromagnet 54 umfasst insgesamt einen Kern 58, der im Wesentlichen U-förmig ausgebildet ist und eine um den Kern 58 gewickelte und bestrombare Spule 60.

Bei der Greifvorrichtung 200 gemäß Figur 5 sind zwei Finger 14 dargestellt, die entsprechend der Ausführungsform nach Figur 1 in den Achsen 18 schwenkbar gelagert sind. Die Finger 14 weisen, entsprechend der Ausführungsform gemäß Figur 1 bis 3, permanent magnetisierte Gegenelemente 32 und 34 auf. Die Gegenelemente 32, 34 weisen auf ihrer nach innen gerichteten Seite jeweils einen Nordpol auf.

Als Stellmagnet ist bei der Ausführungsform gemäß Figur 5 ein axial am nicht dargestellten Grundkörper verschiebbar angeordneter Permanentmagnet 70 vorgesehen. Zur verschieblichen Bewegbarkeit des Permanentmagneten sind grundkörperseitig angeordneten Führungen 72 vorgesehen. Der Permanentmagnet 70 sieht insgesamt zwei ebenfalls in axialer Richtung angeordnete Magnetpolpaare 74 und 76 vor, die jeweils einen Nordpol und einen Südpol umfassen. In der in Figur 5 dargestellten Verschiebelage des Permanentmagneten 70 liegt der Nordpol des Magnetpolpaars 74 im Bereich der Gegenelemente 32 und der Südpol des Magnetpolpaars 76 im Bereich der Gegenelemente 34. Die Gegenelemente 32 werden folglich abgestoßen und die Gegenelemente 34 angezogen. Insgesamt ergibt sich eine Bewegung der Finger 14 um die Achsen 18 in Richtung der Pfeile 78. Wird nun der Permanentmagnet 70 in Richtung des Pfeils 80 in seine zweite Verschiebelage bewegt, so gelangt der Südpol des Magnetpolpaars 74 in den Bereich der Gegenelement 32 und der Nordpolmagnetpolpaar 76 in den Bereich der Gegenelemente 34. Dadurch werden die Gegenelemente 32 angezogen und die Gegenelemente 34 abgestoßen. Die Greiffinger 14 bewegen sich dann derart, dass die freien Enden der Greiffinger 14 aufeinander zuschwenken.

Ein Bewegen des Stellmagneten 70 kann dabei beispielsweise über einen Griff 82 manuell oder über einen nicht dargestellten, separaten Antrieb erfolgen.

## Patentansprüche

1. Greif- oder Spannvorrichtung (10, 100, 200), mit einem Grundkörper (12), mit wenigstens einem gegenüber dem Grundkörper (12) bewegbaren Finger (14) und mit einem Antrieb zum Bewegen des Fingers (14), wobei der Antrieb wenigstens einen Stellmagneten (20, 55, 70) umfasst, der zwei finger- bzw. grundkörperseitige Pole (24, 26; 50, 52; 74, 76) bildet **dadurch gekennzeichnet, dass** der Antrieb wenigstens zwei grundkörper- bzw. fingerseitige, mit den Polen (24,- 26; 50, 52; 74, 76) des Stellmagneten (20, 55, 70) zusammenwirkende ferromagnetische Gegenelemente (32, 34, 44, 46) derart umfasst, dass zur Bewegung des Fingers (14) bei Änderung der Polarisierung der Pole des Stellmagneten (20, 55, 70) ein Gegenelement von einem Pol (24, 50, 74 bzw. 26, 52, 76) angezogen und gleichzeitig ein anderes Gegenelement vom anderen Pol (26, 52, 76 bzw. 24, 50, 74) abgestoßen wird.

2. Greif- oder Spannvorrichtung (10, 100, 200) nach Anspruch 1, **dadurch gekennzeichnet, dass** der Stellmagnet von wenigstens einem ansteuerbaren Elektromagneten (20,55) oder von wenigstens einem am Grundkörper beweglich gelagerten Permanentmagneten (70) gebildet wird.

3. Greif- oder Spannvorrichtung (10, 100, 200) nach Anspruch 1 oder 2, **dadurch gekennzeichnet, dass** fingerseitige und/oder grundkörperseitige Anschläge (32, 34, 44, 46) zur Bewegungsbegrenzung des Fingers (14) vorgesehen sind.

4. Greif- oder Spannvorrichtung (10, 100, 200) nach Anspruch 1, 2 oder 3, **dadurch gekennzeichnet, dass** die Anschläge von den Gegenelementen (32, 34, 44, 46) und/oder vom Stellmagneten (20, 55, 70) gebildet werden.

5. Greif- oder Spannvorrichtung (10, 100, 200) nach einem der vorhergehenden Ansprüche, **dadurch gekennzeichnet, dass** der Stellmagnet (20, 55) am Grundkörper (12) und die Gegenelemente (32, 34, 44, 46) am Finger (14) angeordnet sind.

6. Greif- oder Spannvorrichtung (10, 100, 200) nach einem der vorhergehenden Ansprüche, **dadurch gekennzeichnet, dass** die Gegenelemente (32, 34, 44, 46) als Permanentmagnete oder als Elektrogegenmagnete ausgebildet sind.

7. Greif- oder Spannvorrichtung (10, 100, 200) nach einem der Ansprüche 1 bis 6, **dadurch gekennzeichnet, dass** die Gegenelemente (32, 34, 44, 46) aus Weicheisen sind.

8. Greif- oder Spannvorrichtung (100) nach einem der vorhergehenden Ansprüche, **dadurch gekennzeichnet, dass** der Finger (14) linear entlang einer Linie gelagert angeordnet ist.

9. Greif- oder Spannvorrichtung (100) nach Anspruch 8, **dadurch gekennzeichnet, dass** als Gegenelemente (44, 46) wenigstens ein Permanentmagnet Verwendung findet, dessen Nord-Süd-Richtung (48) senkrecht zur Längsachse (17) des Fingers (14) verläuft und dass der Stellmagnet (55) in Verlängerung dieser Nord-Süd-Richtung (48) angeordnet ist.

10. Greif- oder Spannvorrichtung (100) nach Anspruch 8 oder 9, **dadurch gekennzeichnet, dass** der Stellmagnet als U-förmiger Elektromagnet (55) derart ausgebildet ist, dass das die fingerseitigen Gegenelemente (44, 46) zwischen den Polen (50, 52) des Elektromagneten (55) bewegbar angeordnet ist.

11. Greif- oder Spannvorrichtung (10, 200) nach einem der Ansprüche 1 bis 7, **dadurch gekennzeichnet, dass** der Finger (14) schwenkbar angeordnet ist.

12. Greif- oder Spannvorrichtung (10, 200) nach Anspruch 11, **dadurch gekennzeichnet, dass** der Finger (14) zwei Gegenelemente (32, 34) aufweist, wobei die Schwenkachse (18) zwischen den beiden Gegenelementen (32, 34) angeordnet ist, und dass jedes Gegenelement (32, 34) mit jeweils mit einem Pol (24, 26) des Stellmagneten (20) derart zusammenwirkt, dass bei Änderung der Polarisierung des Stellmagneten (20) ein Gegenelement (32, 34) von einem Stellmagnetpol (24, 26) angezogen und das andere Gegenelement (34, 32) vom anderen Stellmagnetpol (26, 24) abgestoßen wird.

13. Greif- oder Spannvorrichtung (10, 200) nach Anspruch 11 oder 12, **dadurch gekennzeichnet, dass** zwei oder mehr Finger (14) in ihrer neutralen Mittelstellung im Wesentlichen parallel um einen zentrisch angeordneten, grundkörperseitigen Stellmagneten (20) angeordnet sind.

14. Greif- oder Spannvorrichtung (200) nach Anspruch 13, **dadurch gekennzeichnet, dass** der Stellmagnet als axial verschiebbar am Grundkörper angeordneter Permanentmagnet (70) ausgebildet ist, wobei die fingerseitigen Gegenelemente (32, 34) in einer ersten Verschiebelage des Permanentmagneten (70) angezogen bzw. abgestoßen und in einer zweiten Verschiebelage des Permanentmagneten (70) abgestoßen bzw. angezogen werden.

15. Greif- oder Spannvorrichtung (10) nach Anspruch 11, 12 oder 13, **dadurch gekennzeichnet, dass** der Stellmagnet als grundkörperseitig angeordneter Elektromagnet (20) ausgebildet ist, der einen mit einer bestrombaren Spule (28) umwickelten Kern (22) mit einem oberen und einem unteren Kopf (24, 26) umfasst, wobei die beiden Köpfe (24, 26) die beiden Pole des Elektromagneten (20) bilden.

16. Greif- oder Spannvorrichtung (10, 200) nach Anspruch 14 oder 15, **dadurch gekennzeichnet, dass** der Stellmagnet (20, 70) von einer hülsenartigen Abdeckung (30) abgedeckt ist.

17. Greif- oder Spannvorrichtung (10, 100, 200) nach einem der vorhergehenden Ansprüche, **dadurch gekennzeichnet, dass** bei Vorsehen von mehreren Fingern (14) zur Synchronisierung der Bewegung der einzelnen Finger mechanische Kopplungsmittel vorgesehen sind.

## Claims

1. A gripping or clamping device (10, 100, 200), having a base body (12) with at least one finger (14) which is movable in respect to the base body (12), and with a drive mechanism for moving the finger (14), wherein the drive mechanism comprises at least one actuating magnet (20, 55, 70), which forms two poles (24, 26, 50, 52, 74, 75) on the finger side and the base body side, **characterized in that** the drive mechanism comprises at least two ferromagnetic counter elements (32, 34, 44, 46) on the base body side or the finger side, which work together with the poles (24, 26, 50, 52, 74, 75) of the actuating magnet (20, 55, 70) in such a way that, for moving the finger (14), in the course of a change of the polarization of the poles of the actuating magnet (20, 55, 70) a counter element is attracted by one pole (24, 50, 74, or 26, 52, 75) and simultaneously another counter element is repelled by the other pole (26, 52, 75, or 24, 50, 74).

2. The gripping or clamping device (10, 100, 200) in accordance with claim 1, **characterized in that** the actuating magnet is constituted by at least one controllable electromagnet (20, 55) or by at least one permanent magnet (70), which is movably seated on the base body.

3. The gripping or clamping device (10, 100, 200) in accordance with claim 1 or 2, **characterized in that** detents (32, 34, 44, 46) are provided at the finger side and/or the base body side for limiting the movement of the finger (14).

4. The gripping or clamping device (10, 100, 200) in accordance with claim 1, 2 or 3, **characterized in that** the detents are constituted by the counter elements (32, 34, 44, 46) and/or by actuating magnets (20, 55, 70).

5. The gripping or clamping device (10, 100, 200) in accordance with one of the preceding claims, **characterized in that** the actuating magnet (20, 55) is arranged on the base body (12) and the counter elements (32, 34, 44, 46) on the finger (14).

6. The gripping or clamping device (10, 100, 200) in accordance with one of the preceding claims, **characterized in that** the counter elements (32, 34, 44, 46) are embodied as permanent magnets or as counter-electromagnets.

7. The gripping or clamping device (10, 100, 200) in accordance with one if claims 1 to 6, **characterized in that** the counter elements (32, 34, 44, 46) are made of soft iron.

8. The gripping or clamping device (100) in accordance with one of the preceding claims, **characterized in that** the finger (14) is linearly arranged seated along a line.

9. The gripping or clamping device (100) in accordance with claim 8, **characterized in that** at least one permanent magnet is used as counter element (44, 46), whose north-south orientation (48) extends perpendicularly in respect to the longitudinal axis (17) of the finger (14), and that the actuating magnet (55) is arranged in the extension of this north-south orientation (48).

10. The gripping or clamping device (100) in accordance with claim 8 or 9, **characterized in that** the actuating magnet is embodied as a U-shaped electromagnet in such a way, that the counter elements (44, 46) on the finger side are arranged to be movable between the poles (50, 52) of the electromagnet (55).

11. The gripping or clamping device (10, 200) in accordance with one of claims 1 to 7, **characterized in that** the finger (14) is arranged to be pivotable.

12. The gripping or clamping device (10, 200) in accordance with claim 11, **characterized in that** the finger (14) has two counter elements (32, 34), wherein the pivot shaft (18) is arranged between the two counter elements (32, 34), and that each counter element (32, 34) respectively works together with a pole (24, 26) of the actuating magnet (20) in such a way that, when the polarization of the actuating magnet (20) is changed, one counter element (32, 34) is attracted by one actuating magnet pole (24, 26) and the other counter element (34, 32) is repelled by the other actuating magnet pole (26, 24).

13. The gripping or clamping device (10, 200) in accordance with claim 11 or 12, **characterized in that**, in their neutral centered position, two or more fingers (14) are arranged substantially parallel around a centrally arranged actuating magnet (20) on the base body side.

14. The gripping or clamping device (200) in accordance with claim 13, **characterized in that** the actuating magnet is arranged as an axially displaceable permanent magnet on the base body wherein, in a first displacement position of the permanent magnet (70), the counter elements (32, 34) on the finger side are attracted, or repelled, and in a second displacement position of the permanent magnet (70) are repelled, or attracted.

15. The gripping or clamping device (10) in accordance with claim 11, 12 or 13, **characterized in that** the actuating magnet is designed as an electromagnet (20) arranged on the base body side, and comprises a core (22), around which a coil (28), which can be charged with an electric current, has been wound, which core has an upper and lower head (24, 26), wherein the two heads (24, 26) constitute the two poles of the electromagnet (20).

16. The gripping or clamping device (10, 200) in accordance with claim 14 or 15, **characterized in that** the actuating magnet (20, 70) is covered by a sleeve-like covering (30).

17. The gripping or clamping device (10, 100, 200) in accordance with one of the preceding claims, **characterized in that**, when several fingers (14) are provided, mechanical coupling means are provided for synchronizing the movement of the individual fingers.

## Revendications

1. Dispositif de préhension ou de serrage (10, 100, 200) comportant un corps de base (12), au moins un doigt (14) mobile par rapport au corps de base (12) et un entraînement pour le déplacement du doigt (14), l'entraînement comprenant au moins un électro-aimant de commande (20, 55, 70), lequel forme deux pôles (24, 26 ; 50, 52 ; 74, 76) côté corps de base et côté doigt, **caractérisé en ce que** l'entraînement possède au moins deux contre-éléments ferromagnétiques (32, 34, 44, 46) côté corps de base et côté doigt coopérant avec les pôles (24, 26 ; 50, 52 ; 74, 76) de l'électro-aimant de commande (20, 55, 70) de telle façon que, pour le déplacement du doigt (14) lors du changement de polarisation des pôles de l'électro-aimant de commande (20, 55, 70), un contre-élément est attiré par un pôle (24, 50, 74 ou 26, 52, 76) et que, simultanément, un autre contre-élément est repoussé par l'autre pôle (26, 52, 76 ou 24, 50, 74).

2. Dispositif de préhension ou de serrage (10, 100, 200) selon la revendication 1, **caractérisé en ce que** l'électro-aimant de commande est formé par au moins un électro-aimant (20, 55) excitable ou par au moins un aimant permanent (70) monté de manière mobile sur le corps de base.

3. Dispositif de préhension ou de serrage (10, 100, 200) selon la revendication 1 ou 2, **caractérisé en ce que** des butées (32, 34, 44, 46) côté doigt et/ou côté corps de base sont prévues afin de limiter le déplacement du doigt (14).

4. Dispositif de préhension ou de serrage (10, 100, 200) selon la revendication 1, 2 ou 3, **caractérisé en ce que** les butées sont formées par les contre-éléments (32, 34, 44, 46) et/ou par l'électro-aimant de commande (20, 55, 70).

5. Dispositif de préhension ou de serrage (10, 100, 200) selon l'une des revendications précédentes, **caractérisé en ce que** l'électro-aimant de commande (20, 55) est agencé sur le corps de base (12) et les contre-éléments (32, 34, 44, 46) sur le doigt (14).

6. Dispositif de préhension ou de serrage (10, 100, 200) selon l'une des revendications précédentes, **caractérisé en ce que** les contre-éléments (32, 34, 44, 46) sont réalisés sous la forme d'aimants permanents ou d'électroaimants antagonistes.

7. Dispositif de préhension ou de serrage (10, 100, 200) selon l'une des revendications 1 à 6, **caractérisé en ce que** les contre-éléments (32, 34, 44, 46) sont en fer doux.

8. Dispositif de préhension ou de serrage (100) selon l'une des revendications précédentes, **caractérisé en ce que** le doigt (14) est agencé de manière linéaire le long d'une ligne.

9. Dispositif de préhension ou de serrage (100) selon la revendication 8, **caractérisé en ce que**, comme contre-éléments (44, 46), on utilise au moins un aimant permanent dont la direction nord-sud (48) s'étend perpendiculairement à l'axe longitudinal (17) du doigt (14) et **en ce que** l'électro-aimant de commande (55) est agencé dans le prolongement de cette direction nord-sud (48).

10. Dispositif de préhension ou de serrage (100) selon la revendication 8 ou 9, **caractérisé en ce que** l'électro-aimant de commande est réalisé sous la forme d'un d'électro-aimant en forme de U (55) de telle sorte que les contre-éléments côté doigt (44, 46) soient agencés de manière mobile entre les pôles (50, 52) de l'électro-aimant (55).

11. Dispositif de préhension ou de serrage (10, 200) selon l'une des revendications 1 à 7, **caractérisé en ce que** le doigt (14) est agencé de manière à pouvoir être pivoté.

12. Dispositif de préhension ou de serrage (10, 200) selon la revendication 11, **caractérisé en ce que** le doigt (14) présente deux contre-éléments (32, 34), l'axe de pivotement (18) étant agencé entre les deux contre-éléments (32, 34), et **en ce que** chaque contre-élément (32, 34) coopère avec un pôle (24, 26) de l'électro-aimant de commande (20) de telle façon que, lors du changement de polarisation de l'électro-aimant de commande (20), un contre-élément (32, 34) est attiré par un pôle d'électro-aimant de commande (24, 26) et l'autre contre-élément (34, 32) est repoussé par l'autre pôle d'électro-aimant de commande (26, 24).

13. Dispositif de préhension ou de serrage (10, 200) selon la revendication 11 ou 12, **caractérisé en ce qu'**il est agencé deux doigts (14) ou plus, dans leur position centrale neutre, de façon essentiellement parallèle, autour d'un électro-aimant de commande (20) côté corps de base agencé de manière centrale.

14. Dispositif de préhension ou de serrage (200) selon la revendication 13, **caractérisé en ce que** l'électro-aimant de commande est réalisé sous la forme d'un aimant permanent (70) agencé de manière mobile dans le sens axial sur le corps de base, les contre-éléments (32, 34) côté doigt étant attirés ou repoussés dans une première position de déplacement de l'aimant permanent (70) et repoussés ou attirés dans une seconde position de déplacement de l'aimant permanent (70).

15. Dispositif de préhension ou de serrage (10) selon la revendication 11, 12 ou 13, **caractérisé en ce que** l'électro-aimant de commande est réalisé sous la forme d'un électro-aimant (20) agencé côté corps de base, lequel électro-aimant comprend un noyau (22) possédant une tête supérieure et une tête inférieure (24, 26) et étant entouré d'une bobine (28) pouvant être parcourue par un courant, les deux têtes (24, 26) formant les deux pôles de l'électro-aimant (20).

16. Dispositif de préhension ou de serrage (10, 200) selon la revendication 14 ou 15, **caractérisé en ce que** l'électro-aimant de commande (20, 70) est recouvert d'un recouvrement de type manchon (30).

17. Dispositif de préhension ou de serrage (10, 100, 200) selon l'une des revendications précédentes, **caractérisé en ce que**, s'il est prévu plusieurs doigts (14), des moyens de couplage mécaniques sont prévus afin de synchroniser le déplacement des différents doigts.
